# EUROPEAN PATENT APPLICATION

(11) **EP 4 841 103 A1**
(43) Date of publication of application: **18.11.2026**
(21) Application number: 25175780.3
(22) Date of filing: 12.05.2025
(51) Int. Cl.: F03D 80/60

(54) **TEMPERING A WIND TURBINE GENERATOR**

(71) Applicant: Siemens Gamesa Renewable Energy A/S, 7330 Brande (DK)
(72) Inventor: Steffensen, Michael Bilet Skovgaard, 8722 Hedensted (DK); Gilling, Lasse, 7100 Vejle (DK); Bager, Troels, 8800 Viborg (DK)
(74) Representative: SGRE-Association

(57) **Abstract**

It is described an arrangement (110, 210) for tempering a generator (103) arranged within a nacelle (101) of a wind turbine (100), in particular off-shore wind turbine, comprising: a converter system (111) comprising at least a first grid side converter (112a) connectable or connected to a utility grid (114); a tempering liquid piping system (115) adapted to allow circulation of a tempering liquid (116, 237) including heat exchange with the converter system (111); a first heat exchanger (117) adapted to temper tempering air (118) by heat exchange between the tempering liquid (237) and the tempering air (118), the arrangement being adapted to be operated in a first mode of operation, comprising: operating the converter system (111), in particular at least the first grid-side converter (112a), to generate heat; heating the tempering liquid (116, 238) by the converter system generated heat; heating the tempering air (118) via the first heat exchanger (117); supplying the heated tempering air (119) to the generator (103) for reducing moisture from stator and/or rotor components of the generator.

## Description

### Field of invention

The present invention relates to an arrangement for tempering a generator arranged within a nacelle of a wind turbine and further relates to a wind turbine including the arrangement.

### Art Background

Within stator components and/or rotor components of a generator of a off-shore wind turbine, moisture may be present. The moisture may deteriorate components of the generator thus requiring to reduce or remove the moisture. Conventional systems do not allow in a reliable and safe manner to removing moisture from the generator or to dry out the generator.

Thus, there may be a need for an arrangement for tempering a generator, in particular to reduce moisture from stator and/or rotor components of the generator, wherein the reduction of moisture can be achieved in reliable and safe manner, in particular not requiring complex equipment.

### Summary of the Invention

This need may be met by the subject matter according to the independent claims. Advantageous embodiments of the present invention are described by the dependent claims.

According to an embodiment of the present invention it is provided an arrangement for tempering a generator arranged within a nacelle of a wind turbine, comprising: a converter system comprising at least a first grid side converter connectable or connected to a utility grid; a tempering liquid piping system adapted to allow circulation of a tempering liquid including heat exchange with the converter system; a first heat exchanger adapted to temper tempering air by heat exchange between the tempering liquid and the tempering air, the arrangement being adapted to be operated in a first mode of operation, comprising: operating the converter system, in particular at least the first grid-side converter, to generate heat; heating the tempering liquid by the converter system generated heat; heating the tempering air via the first heat exchanger; supplying the heated tempering air to the generator for reducing moisture from stator and/or rotor components of the generator.

The generator may be or may comprise a synchronous permanent magnet generator, in particular having an outer rotor. The stator of the generator may comprise at least one multiphase winding set or two or even more multiple phase winding sets which may be operated independently from each other. The converter system may comprise for each of the one or more winding sets a generator-side converter which is electrically connected to each of the multiphase winding sets, for example three-phase winding sets.

The generator may be tempered (e.g. affecting its temperature, e.g. increasing or decreasing its temperature, e.g. by convection and/or heat conduction and/or radiation) by applying the tempering air to be in contact with stator portions and/or rotor portions. Tempering air may for example be blown by using one or more fans or ventilators through particular cooling ducts which may for example be present within stator components. Tempering air may also be blown or supplied to a gap between the rotor and the stator.

The tempering air may for example, during a procedure of reduction of the moisture, have a temperature between 0 °C and 60 °C and may thus effect to evaporate any moisture or humidity or water which may be present at stator components and/or rotor components of the generator. During this first mode of operation, the tempering air will thus carry away any moisture or water which may be present at the stator components by increasing its humidity, thus by increasing the humidity of the tempering air. Since the tempering air may be supplied to the generator components and since the tempering air having increased its humidity may be withdrawn or removed from the generator, an effective procedure of reducing moisture from the stator and/or rotor components of the generator may be achieved in an effective manner. In this first mode of operation, the tempering air has been heated up by receiving heat from the tempering liquid in turn having received heat from the converter system.

The tempering liquid may for example comprise oil, water glycol or a combination of water and glycol. The liquid piping system may allow to circulate the tempering liquid between the converter system and the first heat exchanger (and potentially also between the second heat exchanger). Thus, the tempering liquid may neither be taken from or expelled to the environment, but may be kept (e.g. without loss or supply) within the tempering liquid piping system.

In particular, not in any operation mode liquid may be expelled to the environment. Heat from the liquid will be expelled to environment when turbine is in 'normal' operation mode.

For exchanging heat with the converter system, the tempering liquid may be guided within metallic pipes or pipe sections which may be in thermal contact with portions of the converter system, in particular high power semiconductors (e.g. transistors) or other electronic components. Thereby, for example the converter system may comprise metallic cooling blocks with which the piping sections of the tempering liquid piping system may be in thermal contact. The heated tempering liquid in turn then heats up the tempering air by employing the first heat exchanger.

In order to generate heat, the converter system may be operated differently from a normal operation mode during power production for example. The converter system may be operated involving for example receiving power from the utility grid and optionally from another power source, such as a battery. The heat may evolve due to electrical losses of the converter system. The arrangement may be implemented for example utilizing equipment such as the liquid piping system, the first heat exchanger which may already be provided for air conditioning purposes. Reduction or even removing the moisture from the stator and/or rotor components may thus be achieved by using equipment which is provided for cooling purposes and merely differently controlling those components. Thereby, the complexity of the system may be kept low and also costs of the system may be reduced.

Generator cooling air may dragged (from the environment) into the generator via the air filtration unit but the air temperature is not lowered (in the air filtration unit or the first heat exchanger).

In particular, embodiments of the present invention may be utilized for the "direct cooled" cooling topology or equipment. Thereby, the direct cooled topology may include to take air from the outside, conditioning it and sucking it through the nacelle to cool the stator windings or other stator or rotor components. Embodiments of the present invention also may allow to keep the temperature high and the humidity low of the generator rotor and/or stator components in order to dry out the generator. Thus, embodiments of the present invention may also be employed for cooling systems, where the cooling air is not recirculated and hence the heat generated by the fans is lost to the ambient environment instead of accumulating in the generator air.

During the first operation mode, the rotor of the wind turbine may be idle or may be slowly rotating. The generator may be disconnected from the converter system and thus also disconnected from any utility grid.

According to an embodiment of the present invention, operating the converter system, in particular the first grid-side converter, to generate heat comprises at least one of: connecting or keeping connected the first grid-side converter with the grid; the first grid-side converter receiving active power from the grid; the first grid-side converter transforming at least part of active power from the grid into heat; supplying gate driver signals to plural power semiconductors (e.g. transistors ) of the first grid-side converter thereby switching the first grid-side converter involving generation of heat; the first grid-side converter generating heat by losses; the first grid-side converter importing or receiving reactive power from the grid; the first grid-side converter exporting or supplying reactive power to the grid.

Heat may be generated by the converter system by operating the converter system in different manners which may be selected in dependence on the application and/or the particular configuration of the converter system and other components.

The first grid-side converter may for example be kept connected or may be connected to the utility grid in order to receive active power and/or receive or export reactive power. The converter system, in particular the first grid-side converter (or any second grid-side converter if present) may be switched which may include that controllable power switches, such as power semiconductors , change their conductive states, for example with a switching frequency between 1 kHz and 5 kHz. The switching may be performed such that at the output terminals of the converter system substantially the grid frequency is achieved, for example 50 Hz or 60 Hz. Due to losses which may occur during the switching, thereby active power received from the grid may be at least partially transformed into heat. This heat may at least partially be utilized for heating the tempering liquid and in turn for heating the tempering air for achieving the demoisturing function of generator components.

The second grid-side converter may be an optional component, however, e.g. present if for example the generator comprises for example two multiphase winding sets which may be operated independently from each other. In this case, the second grid-side converter may be connected to a second multiphase winding set of the generator. For this type of embodiment, the second grid-side converter may either be utilized or controlled substantially in a same or similar manner as the first grid-side converter in order to also generate heat. The second generator-side converter may be operated to generate heat depending on the required amount of heat to be generated for performing the demoisturing (reducing or removing of moisture) procedure. Thereby, flexibility and/or higher capacity of demoisturing may be achieved.

According to an embodiment of the present invention, operating the converter system to generate heat comprises at least one of: allowing definable electrical connection between the first and the second grid-side converter; the first grid-side converter exporting to or importing from the second grid-side converter reactive power and/or active power; the second grid-side converter exporting to or importing from the first grid-side converter reactive power and/or active power.

Importing and/or exporting reactive power from the first/second grid-side converter to the second/first grid-side converter may involve generation of heat due to losses. The losses may be compensated by active power received from the utility grid. The kind of operation of the converter system in the first mode of operation may be selected depending on the for example efficiency or amount of required heat to be generated.

According to one example operating the converter system may include to switch on the IGBTs to create heat. Also, additionally or alternatively, the converter portions may import or export reactive power. Furthermore, to reduce the impact on the grid it could be possible to import on one set of converters and export on another set of converters making the net reactive power (exported to or imported from the grid) zero.

The converters may generate loss simply via a 1-5 kHz switching operation. Losses maybe essentially the same in export and import mode, Voltage may be 690 Vac phase to phase. Thereby, high flexibility is provided.

According to an embodiment of the present invention, the arrangement further comprises an air conveying system adapted to guide, in particular suck, the tempering air from the first heat exchanger to the generator; an air inlet port for allowing entry of air from the environment into the air conveying system as tempering air; an outlet port for allowing exit of tempering air, guided by the air conveying system and having exchanged heat with the generator, to the environment, wherein in particular the tempering air is not recirculated.

The air conveying system may be configured to substantially expel any amount of tempering air entering through the air inlet port towards the air outlet port. Thereby, the tempering air is not recirculated within the air conveying system. Nevertheless, performing a demoisturing operation is enabled. The air inlet port and/or air outlet port may comprise respective valves which may be controllable, for example by a controller as mentioned below, in order to adjust an inlet rate and/or outlet rate of the respective tempering air. Thereby, also heating capacity or demoisturing capacity and/or cooling capacity may be adjusted as required.

According to an embodiment of the present invention, the arrangement further comprises a second heat exchanger, in particular installed outside of an inner space of the nacelle, adapted to cool the tempering liquid by heat exchange between the tempering liquid and environmental air.

The second heat exchanger may be employed in particular for a below described second mode of operation, for example a cooling mode of operation. The second heat exchanger allows to cool the tempering liquid by exchange of heat with environmental air outside the arrangement and in particular also outside the nacelle and outside the wind turbine. The second heat exchanger may for example be installed on top of the nacelle. It should be understood that the first and/or second heat exchanger may comprise one or more components having sufficiently large surface areas for exchanging heat between the tempering air and the tempering liquid on one hand and the environmental air and the tempering liquid on the other hand. The second heat exchanger may for example be implemented by existing equipment.

The second heat exchanger may be used to cool converter and/or transformer and/or bearing and/or hydraulics and/or auxiliary electrical system. It is not used to cool the generator.

According to an embodiment of the present invention, the arrangement further comprises a valve system, in particular including a three-way-valve, controllable to allow passage of tempering liquid having absorbed heat from converter system selectively to the first heat exchanger and/or to the second heat exchanger, wherein in particular the valve system is adapted to allow selective adjustment of an amount or relative amount of tempering liquid having absorbed heat from the converter system guided to the first heat exchanger and/or to the second heat exchanger.

The valve system may be configured to allow for example switching between a first operation mode and a second operation mode. The valve system, in particular three-way valve, may either be configured as a binary valve, for example allowing to (selectively) switching communication between one valve input port and a first output port or between the valve input port and a second output port. The first output port may be connected or may lead to the first heat exchanger and the second output port may be connected or may lead to the second heat exchanger. In other embodiments, the valve system, in particular three-way valve, may be adapted to allow continuous or step-wise adaption or adjustment of flow rate or amount which may be guided from the valve input port to the first output port and/or the second output port. Thus, the valve system may allow a sharing of flow from the valve input port to the first output port and the second output port in a definable relative or absolute amount. The valve system may allow to achieve a high flexibility for tempering the generator and/or the converter system.

According to an embodiment of the present invention, the valve system is adapted to allow to guide a first amount of tempering liquid having absorbed heat from the converter system to the first heat exchanger, wherein in particular the valve system is adapted to allow to guide a second amount of tempering liquid having absorbed heat from the converter system to the second heat exchanger, wherein the valve system is adapted to adjust the first amount and/or the second amount according to desired flow rate and/or desired mass rate and/or desired relative sharing.

The first amount may denote the amount of the tempering liquid having absorbed heat from the converter system and is guided to the first heat exchanger. The second amount may indicate the amount of tempering liquid having absorbed heat from the converter system and which is guided to the second heat exchanger. The first amount/second amount may be defined as respective absolute amounts or absolute flow rates or absolute mass rates or as respective relative amount. The relative amount may be related to the total amount which enters or is supplied to for example the three-way valve via the entry or input port of the three-way valve. Thereby, high flexibility is provided and improved controllability is provided of cooling and/or demoisturing procedures.

According to an embodiment of the present invention, during the first mode of operation a greater amount of tempering liquid having absorbed heat from converter system is passed to the first heat exchanger than to the second heat exchanger, wherein in particular in the first mode of operation the first amount is between 100% and 80% and/or the second amount is between 0% and 20%.

Thus, during the first mode of operation, the tempering liquid is heated and most of the amount of tempering liquid is guided to the first heat exchanger to effectively heat then the tempering air for demoisturing the generator components.

According to an embodiment of the present invention, the arrangement is adapted to be operated in a second mode of operation, comprising at least one of: at least partially guiding, in particular via the valve system, in particular the three-way valve, tempering liquid to the second heat exchanger; cooling the tempering liquid; guiding at least a portion of the tempering liquid to the converter system; cooling the converter system.

The second mode of operation may also be referred to as a cooling mode of operation which may allow to cool the converter system and/or other components, such as a transformer or any auxiliary converter as well as the generator. Thereby, the generator may be cooled by the tempering air which has been cooled by the cooled tempering liquid. Other components may be directly cooled by using the cooled tempering liquid which may effectively exchange heat via solid or metallic portions. The valve system, in particular three-way valve, may allow to switch between the first mode of operation and the second mode of operation. The cooling of different components, such as the converter system and/or the generator, may be performed depending for example on temperatures of the respective components and/or depending on maximal temperatures or design temperatures of those components. The respective required cooling capacity may be adjusted by adjusting one or more valves, and also in particular the aforementioned valve system.

The tempering liquid piping system may comprise one or more valves in order to allow adjustment of those kind of flow rates to the different components. Thereby, the arrangement is adapted according to this embodiment in order to selectively perform a demoisturing function or a cooling function. According to other embodiments of the present invention it may for example be enabled to concurrently perform a cooling function as well as a demoisturing function by appropriately setting one or more valves and flow rates.

According to an embodiment of the present invention, during the second mode of operation a greater amount of tempering liquid having absorbed heat from converter system is passed to the second heat exchanger than to the first heat exchanger, wherein in particular in the second mode of operation the first amount is between 10% and 0% and/or the second amount is between 90% and 100%. Thereby, effective cooling may be achieved.

According to an embodiment of the present invention, the arrangement is adapted to be operated in a third mode of operation, comprising at least one of: guiding at least a portion of the tempering air into the nacelle; guiding at least a portion of the tempering air into the nacelle for pressurizing the nacelle; guiding at least a portion of the tempering air into the nacelle for controlling temperature within the nacelle.

The third mode of operation may allow to for example keep the inner space of the nacelle at a minimum temperature or at a desired temperature in order for example to keep components operable. The tempering air having tempered or in particular heated the inside of the nacelle may then be expelled to the environment, for example through one or more labyrinth seals or via the generator. Thereby, the arrangement may be employed in an even improved flexibility for providing even more functions depending on the requirements.

According to an embodiment of the present invention, the arrangement further comprises at least one of: one or more pump and/or compressor; one or more fan; one or more valve; included within the tempering liquid piping system and/or the air conveying system to allow driving the tempering liquid and/or the tempering air, and/or wherein the first heat exchanger comprises an air filter system to reduce solid and/or liquid particles from the air taken from the environment.

By those components, the flow rates of tempering liquid and/or tempering air being provided to the different components may be selectively adjusted based on for example component temperatures for cooling requirements or demoisturing requirements.

According to an embodiment of the present invention, the arrangement further comprises at least one of: a controller adapted for at least one of: to control a valve system, in particular three-way valve; to adjust flow rates of the tempering liquid and/or the tempering air in the tempering liquid piping system and/or the air conveying system; a humidity sensor adapted to measure humidity within the generator; a temperature sensor adapted to measure temperature of the generator and/or the converter system and/or the inside of the nacelle.

The controller may also receive measurement signals from for example the humidity sensor and/or temperature sensor and may then be configured to process those measurement signals in order to define respective cooling requirements and/or heating requirements and/or adapted to adjust required flow rates of the tempering air and/or tempering liquid and setting respective valve control signals such as to achieve the required cooling requirements and/or heating or demoisturing requirements.

According to an embodiment of the present invention it is provided a wind turbine, comprising: a nacelle; a generator having rotor and stator and being arranged within the nacelle; a hub having plural rotor blades mounted thereon, the hub being coupled to the rotor; an arrangement for tempering the generator according to any one of the preceding embodiments, the converter system being connectable to the generator, in particular via a DC-link and at least one generator side converter.

In another wording, the converter system may consist of a grid side (net bridge), a generator side (generator bridge) and a DC-link connecting the net bridge with the generator bridge.

The aspects defined above and further aspects of the present invention are apparent from the examples of embodiment to be described hereinafter and are explained with reference to the examples of embodiment. The invention will be described in more detail hereinafter with reference to examples of embodiment but to which the invention is not limited.

### Brief Description of the Drawings

Embodiments of the present invention are now described with reference to the accompanying drawings. The invention is not restricted to the illustrated or described embodiments.

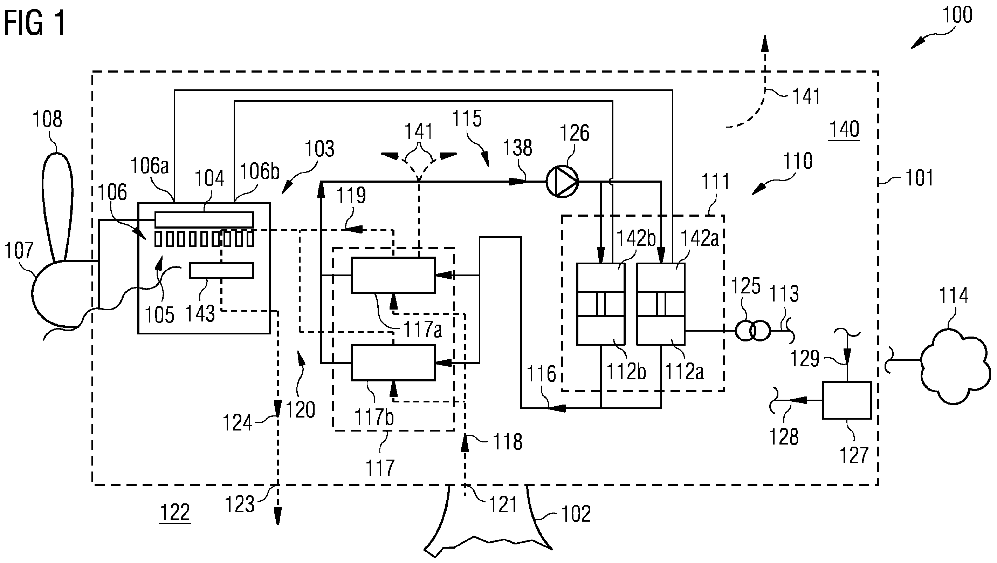

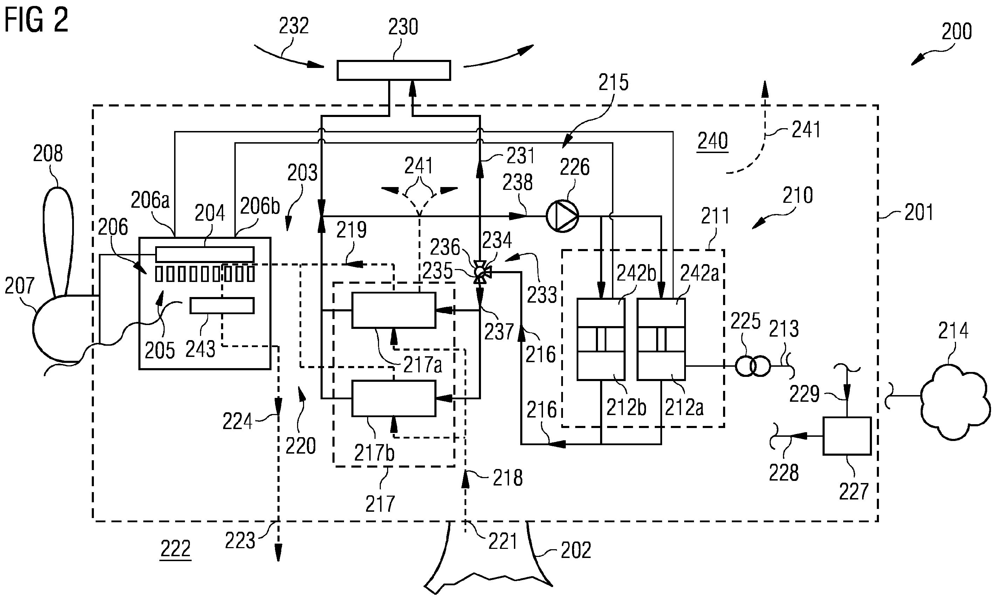

Figs. 1 and 2 schematically illustrate wind turbines according to embodiments of the present invention comprising arrangements for tempering a generator according to embodiments of the present invention.

### Detailed Description

The illustration in the drawings is in schematic form. It is noted that in different figures, elements similar or identical in structure and/or function are provided with the same reference signs or with reference signs, which differ only within the first digit. A description of an element not described in one embodiment may be taken from a description of this element with respect to another embodiment.

The wind turbine 100 schematically illustrated in **Fig. 1** comprises a nacelle 101 which is rotatably mounted on top of a wind turbine tower 102. The wind turbine 100 further comprises a generator 103 having a rotor 104 and an only schematically illustrated stator 105, the generator 103 being arranged within the nacelle 101. The stator 105 has only schematically indicated stator windings 106 which are wound at plural slots between teeth of a stator yoke. In the present embodiment illustrated in Fig. 1, the stator windings 106 comprise a first and a second multiphase stator winding 106a, 106b electrically connected to the first generator side converter 142a and the second generator side converter 142b, respectively, which are comprised in the converter system 111.

The wind turbine 100 further comprises a hub 107 having plural rotor blades 108 mounted thereon, wherein the hub 107 is coupled to the rotor 104 of the generator 103.

The wind turbine 100 further comprises an arrangement 110 for tempering the generator 103 according to an embodiment of the present invention. The arrangement 110 comprises a converter system 111 comprising at least a first grid-side converter 112a (and in particular a DC-link and a first generator side converter 142a) which is connectable or connected using power line 113 to a utility grid 114. The arrangement 110 further comprises a tempering liquid piping system 115 which is adapted to allow circulation of a tempering liquid (e.g. indicated by flow arrow 116) including heat exchange with the converter system 111.

The arrangement 110 further comprises a first heat exchanger 117 (here embodied including two sections 117a, 117b which also provide an air filtration function) adapted to temper tempering air (indicated with flow arrow 118) by heat exchange between the tempering liquid 116 and the tempering air 118.

The arrangement 110 is adapted to be operated in a first mode of operation which comprises to operate the converter system 111 to generate heat. In the first mode of operation, the tempering liquid 138, is heated by the converter system generated heat to provide heated tempering liquid 116. Furthermore, the tempering air 118 is heated via the first heat exchanger 117 and the heated tempering air (indicated with arrow 119) is supplied (e.g. by fans or propellors 143, 243) to the generator 103 for reducing moisture from stator and/or rotor components of the generator 103.

During the first mode of operation, while the converter system 111 is operated to generate heat, the first grid-side converter 112a is connected or kept connected to the utility grid 114 and the first grid-side converter 112a receives active power from the grid 114. The first grid-side converter 112a may be switched by supplying gate driver signals to plural power converters of the first converter 112a. Thereby, due to losses, heat is generated.

In the embodiment illustrated in Fig. 1, the converter system 111 comprises a second grid-side power converter 112b (and in particular a DC-link and a second generator side converter 142b). The second grid-side power converter 112b may be operated or controlled in a similar or a different manner than the first power converter 112a in order to also generate heat or it can be operated not to generate any heat, e.g. switched off. In order to generate heat, it could also, alternatively or additionally, be provided to control the power converter 112a, 112b such as to exchange for example reactive power via not in detail illustrated electrical connections.

The arrangement 110 further comprises an air conveying system 120 which is adapted to guide the tempering air 119 from the first heat exchanger 117 to the generator 103. The arrangement 110 further comprises an air inlet port 121 for allowing entry of air from the environment 122 (outside the nacelle 101), as the tempering air 118. The arrangement 110 further comprises an outlet port 123 for allowing exit of the tempering air 124 which has exchanged heat with the generator 103, to the environment 122. It should be noted that the tempering air inside the air conveying system 120 is not recirculated but it enters at the air inlet port 121 undergoes heat exchange within the first heat exchanger 117 and the generator 103 and then is expelled or is allowed to enter the environment 122 via the outlet port 123.

As is schematically indicated in Fig. 1, the output power cable 113 or the power transmission line between the converter system 111 and the utility grid 114 comprises an transformer 125 which may also be in heat exchange with the tempering liquid 116 similar to the converter system 111 or may even be considered as a part of the converter system 111.

Also indicated in Fig. 1 is a pump 126 which enables to transport or convey the tempering liquid 116 in a circulation through the tempering liquid piping system 115. The arrangement 110 may further comprise one or more further pumps or compressors and/or fans for conveying the tempering liquid or the tempering air. Furthermore, one or more valves may be provided to achieve different modes of operation.

The arrangement 110 further comprises a controller 127 which may control one or more components, such as valves and/or pumps and/or compressors and/or fans by sending control signals 128. The controller 127 may also be configured to receive measurement signals 129 from one or more sensors in order to for example measure humidity and/or temperature in one or more components as explained above.

In the embodiment illustrated in Fig. 1, the arrangement 110 is at least configured to adopt the first mode of operation in which a demoisturing function may be performed. Thereby, the tempering air 119 heated by heat exchange within the first heat exchanger 117 is provided or blown into the generator 103 in order to absorb humidity or moisture from generator components, thereby increasing the humidity of the tempering air which is then expelled towards the environment 122 via the outlet port 123.

The wind turbine 200 schematically illustrated in **Fig. 2** comprises similarities to the wind turbine 100 illustrated in Fig. 1 and such similar elements or features are not described in detail but may be taken from the description related to Fig. 1. Additionally to the embodiment illustrated in Fig. 1, the arrangement 210 within the wind turbine 200 comprises a second heat exchanger 230 which is in particular installed on top of the nacelle 201, i.e., outside of the nacelle 201. The second heat exchange 230 is adapted to cool the tempering liquid 231 by heat exchange between the tempering liquid 231 and environmental air 232. The environmental air 232 exchanges heat with surfaces of the second heat exchanger 230 with which the tempering liquid 231 is in thermal contact.

The arrangement 210 illustrated in Fig. 2 further comprises a valve system, in particular three-way valve 233, which is controllable to allow passage of tempering liquid 216 having absorbed heat from the converter system 211 selectively to the first heat exchanger 217 and/or to the second heat exchanger 230. The three-way valve 233 comprises an input port 234, a first output port 235 leading to the first heat exchanger 217, and a second output port 236 leading to the second heat exchanger 230.

A first amount 237 of the tempering liquid having absorbed heat from the converter system 211 is guided to the first heat exchanger 217. A second amount 231 of the tempering liquid having absorbed heat from the converter system 211 is guided to the second heat exchanger 230 by the action of the three-way valve 233. The first amount and/or second amount may be adjustable by appropriately setting the three-way valve for example by control signals 228 sent by the controller 227. In the first mode of operation, the first amount 237 may be greater than the second amount 231.

The arrangement 210 illustrated in Fig. 2 is also configured to be operated in a second mode of operation which comprises a cooling function. Thereby, tempering liquid 231 is guided to the second heat exchanger 230 and the tempering liquid is thereby cooled. A portion 238 of the tempering liquid is guided to the converter system 211 in order to cool the converter system 211.

The cooling liquid leaving the second heat exchanger may not enter the first heat exchanger directly. That would not make sense as air temperature around first and second heat exchanger are identical.

The liquid from the second heat exchanger may mixed with the outlet liquid from first heat exchanger before it may enter the converter system. The mixing may be done to avoid too cold liquid from entering the converter system. Condensation may occur if liquid is too cold.

In the second mode of operation, the second amount 231 is between 90% and 100% or at least greater than the first amount 237.

Almost all of the air leaving the first heat exchanger may be guided to the generator. Only a small amount may leave nacelle via labyrinth seal and other leaks.

In the embodiment illustrated in Fig. 2, the arrangement 210 may further be adapted to be operated in a third mode of operation, involving to temper (e.g. heat) the inside 240 of the nacelle 201. Thereby, at least a portion of the tempering air 241 (having received heat in the first heat exchanger 217) is guided into the nacelle, i.e., into the interior 240 of the nacelle 201. For this operation, one or more valves or fans or propellers may be present within the tempering air conveying system.

As can be appreciated from Figs. 1 and 2, the direct cooled wind turbine exhausts the tempering air via the outlet port 123 to the environment and therefore increasing the heat generated by frictional losses (increasing fan speed) will also increase the mass flow rate and hence the added heat will not significantly increase the temperature. According to embodiments of the present invention, the heat is created by other means and specifically by either switching on the converter at either a fixed or a set-point based frequency and/or by generating a current in the converter by importing reactive power of one system and exporting reactive power to the other system. The heat generated by the converters through the switching and/or converters and transformers through the reactive power import/export will then be used by the direct air cooling system to heat the air to the desired temperature for dry out the generator components. The flow rate can also be adjusted to achieve the desired temperature as the frictional heating is not required to increase the temperature. Embodiments may allow to run the generator fan or propellers at relatively low speed to reduce the needed heat generated by the converters and/or converters and/or transformer as those losses has to be supplied by the electrical grid.

Regarding the third mode of operation, thereby, a minimum temperature of the nacelle may be kept by creating a low flow rate through the nacelle either by pressurizing the nacelle and causing a leakage through the labyrinth seal between nacelle and generator or by opening one or two exhaust valves to create the flow.

It should be noted that the term "comprising" does not exclude other elements or steps and "a" or "an" does not exclude a plurality. Also elements described in association with different embodiments may be combined. It should also be noted that reference signs in the claims should not be construed as limiting the scope of the claims.

## Claims

1. Arrangement (110, 210) for tempering a generator (103) arranged within a nacelle (101) of a wind turbine (100), in particular off-shore wind turbine, comprising:
a converter system (111) comprising at least a first grid side converter (112a) connectable or connected to a utility grid (114) and in particular comprising a first DC-link and a first generator side converter;
a tempering liquid piping system (115) adapted to allow circulation of a tempering liquid (116, 237) including heat exchange with the converter system (111);
a first heat exchanger (117) adapted to temper tempering air (118) by heat exchange between the tempering liquid (237) and the tempering air (118),
the arrangement being adapted to be operated in a first mode of operation, comprising:
operating the converter system (111), in particular at least the first grid-side converter (112a), to generate heat;
heating the tempering liquid (116, 238) by the converter system generated heat;
heating the tempering air (118) via the first heat exchanger (117);
supplying the heated tempering air (119) to the generator (103) for reducing moisture from stator and/or rotor components of the generator.

2. Arrangement according to the preceding claim, wherein operating the converter system, in particular the first grid-side converter (112a), to generate heat comprises at least one of:
connecting or keeping connected the first grid-side converter (112a) with the grid (114);
the first grid-side converter (112a) receiving active power from the grid (114);
the first grid-side converter (112a) transforming at least part of active power from the grid into heat;
supplying gate driver signals to plural power transistors of the first grid-side converter (112a) thereby switching the first grid-side converter involving generation of heat;
the first grid-side converter (112a) generating heat by losses;
the first grid-side converter (112a) importing or receiving reactive power from the grid;
the first grid-side converter (112a) exporting or supplying reactive power to the grid.

3. Arrangement according to any one of the preceding claims, wherein the converter system further comprises a second grid-side converter (112b) and in particular comprising a second DC-link and a second generator side converter;
wherein operating the converter system to generate heat comprises at least one of:
connecting or keeping connected the second grid-side converter (112b) with the grid (114);
the second grid-side converter (112b) receiving active power from the grid;
the second grid-side converter (112b) transforming at least part of active power from the grid into heat;
supplying gate driver signals to plural power transistors of the second grid-side converter (112b) thereby switching the first grid-side converter involving generation of heat;
the second grid-side converter (112b) generating heat by losses;
the second grid-side converter (112b) importing or receiving reactive power from the grid;
the second grid-side converter (112b) exporting or supplying reactive power to the grid.

4. Arrangement according to the preceding claim, wherein operating the converter system to generate heat comprises at least one of:
allowing definable electrical connection between the first grid-side converter (112a) and the second grid-side converter (112b);
the first grid-side converter (112a) exporting to or importing from the second grid-side converter (112b) reactive power and/or active power;
the second grid-side converter (112b) exporting to or importing from the first grid-side converter (112a) reactive power and/or active power;
the first grid-side converter and/or the second grid-side converter importing active power from the grid.

5. Arrangement according to any one of the preceding claims, further comprising at least one of:
an air conveying system (120) adapted to guide, in particular suck, the tempering air (119) from the first heat exchanger (117) to the generator (103);
an air inlet port (121) for allowing entry of air (118) from the environment into the air conveying system as tempering air;
an air outlet port (123) for allowing exit of tempering air (124), guided by the air conveying system and having exchanged heat with the generator (103), to the environment (122),
wherein in particular the tempering air is not recirculated.

6. Arrangement according to any one of the preceding claims, further comprising:
a second heat exchanger (230), in particular installed outside of an inside (140, 240) of the nacelle (211), adapted to cool the tempering liquid (231) by heat exchange between the tempering liquid and environmental air (232).

7. Arrangement according to the preceding claim, further comprising:
a valve system, in particular including a three-way-valve (233), controllable to allow passage of tempering liquid having absorbed heat from converter system selectively to the first heat exchanger (217) and/or to the second heat exchanger (230),
wherein in particular the valve system is adapted to allow selective adjustment of an amount or relative amount of tempering liquid having absorbed heat from the converter system guided to the first heat exchanger and/or to the second heat exchanger.

8. Arrangement according to the preceding claim,
wherein the valve system is adapted to allow to guide a first amount (237) of tempering liquid having absorbed heat from the converter system (211) to the first heat exchanger (217),
wherein in particular the valve system is adapted to allow to guide a second amount (231) of tempering liquid having absorbed heat from the converter system (211) to the second heat exchanger (230),
wherein the valve system is adapted to adjust the first amount and/or the second amount according to desired flow rate and/or desired mass rate and/or desired relative sharing.

9. Arrangement according to any one of the preceding claims,
wherein in the first mode of operation a greater amount of tempering liquid having absorbed heat from converter system is passed to the first heat exchanger (217) than to the second heat exchanger (230),
wherein in particular in the first mode of operation the first amount is between 100% and 80% and/or the second amount is between 0% and 20%.

10. Arrangement according to any one of the preceding claims, the arrangement being adapted to be operated in a second mode of operation, comprising at least one of:
at least partially guiding, in particular via the valve system, in particular the three-way valve, tempering liquid (231) to the second heat exchanger (230);
cooling the tempering liquid (231);
guiding at least a portion (238) of the tempering liquid to the converter system (211);
cooling the converter system (211).

11. Arrangement according to the preceding claim, wherein in the second mode of operation a greater amount of tempering liquid having absorbed heat from converter system is passed to the second heat exchanger (230) than to the first heat exchanger (217),
wherein in particular in the second mode of operation the first amount is beween 10% and 0% and/or the second amount is between 90% and 100%.

12. Arrangement according to any one of the preceding claims, the arrangement being adapted to be operated in a third mode of operation, comprising at least one of:
guiding at least a portion (141, 241) of the tempering air into (140,240) the nacelle (101);
guiding at least a portion of the tempering air into the nacelle for pressurizing the nacelle;
guiding at least a portion of the tempering air into the nacelle for controlling temperature within the nacelle.

13. Arrangement according to any one of the preceding claims, further comprising at least one of:
one or more pump and/or compressor (126);
one or more fan (143);
one or more valve (233);
included within the tempering liquid piping system (115) and/or the air conveying system (120) to allow driving the tempering liquid and/or the tempering air, and/or
wherein the first heat exchanger (117) comprises an air filter system to reduce solid and/or liquid particles from the air taken from the environment.

14. Arrangement according to any one of the preceding claims, further comprising at least one of:
a controller (127) adapted for at least one of:
to control a valve system, in particular three way valve (233);
to adjust flow rates of the tempering liquid and/or the tempering air in the tempering liquid piping system and/or the air conveying system;
a humidity sensor adapted to measure humidity within the generator;
a temperature sensor adapted to measure temperature of the generator and/or the converter system and/or the inside of the nacelle.

15. Wind turbine (100, 200), in particular off-shore wind turbine, comprising:
a nacelle (101);
a generator (103) having rotor (104) and stator (106) and being arranged within the nacelle (101);
a hub (107) having plural rotor blades (108) mounted thereon, the hub being coupled to the rotor;
an arrangement (110, 210) for tempering the generator (103) according to any one of the preceding claims, the converter system (111) being connectable to the generator, in particular via a DC-link and at least one generator side converter.
